(19) Europäisches Patentamt
European Patent Office
Office européen des brevets

(11) **EP 2 313 188 B1**

(12) **EUROPEAN PATENT SPECIFICATION**

(45) Date of publication and mention
of the grant of the patent:
**05.06.2013 Bulletin 2013/23**

(51) Int Cl.:
***B01J 8/02*** (2006.01)

(21) Application number: **08789983.7**

(22) Date of filing: **12.06.2008**

(86) International application number:
**PCT/IT2008/000393**

(87) International publication number:
**WO 2009/150677 (17.12.2009 Gazette 2009/51)**

(54) **IMPROVED CATALYST TUBES FOR ENDOTHERMIC REACTIONS, WITH SPECIAL REFERENCE TO THE CRACKING OF HYDROGEN SULFIDE TO PRODUCE HYDROGEN AND SULFUR**

VERBESSERTE KATALYSATORROHRE FÜR ENDOTHERME REAKTIONEN MIT SPEZIELLER BEZUGNAHME AUF DAS CRACKEN VON SCHWEFELWASSERSTOFF ZUR HERSTELLUNG VON WASSERSTOFF UND SCHWEFEL

TUBES CATALYTIQUES AMÉLIORÉS POUR RÉACTIONS ENDOTHERMIQUES, AVEC UNE RÉFÉRENCE PARTICULIÈRE AU CRAQUAGE DE SULFURE D HYDROGÈNE POUR PRODUIRE DE L HYDROGÈNE ET DU SOUFRE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**27.04.2011 Bulletin 2011/17**

(73) Proprietor: **Processi Innovativi Srl**
**67100 L'Aquila (IT)**

(72) Inventors:
• **GIACOBBE, Francesco**
**I-00147 Roma (IT)**

• **IAQUANIELLO, Gaetano**
**I-00153 Roma (IT)**

(74) Representative: **Sarpi, Maurizio**
**Studio Ferrario S.r.l.**
**Via Collina, 36**
**00187 Roma (IT)**

(56) References cited:
**GB-A- 932 745**

## Description

The invention relates to regenerative catalyst tubes suitable for production of hydrogen and sulphur by thermal cracking of the hydrogen sulphide or other products.

It is known that the hydrogen sulphide ($H_2S$) at high temperature will form H2 and S in presence of a catalyst according to reaction

$$H_2S = H_2 + S$$

The reaction product then must be quenched in a short time to avoid the reverse reaction. This reaction is high endothermic and it is performed in catalyst tubes immersed in a radiant box or in the combustor chamber of a claus reactor. The H2S is normally produced in the refineries were the products are desulfurized by hydrotreting with the H2. The H2S is then burned to produce sulfur. The proposed catalyst tube will permit to perform the cracking of the H2S according to the above reaction and other endothermal catalytic reactions and at the same time to quench the reaction product in a fraction of a second.

It is furthermore known to make use of the heat-content of product gas emanating from a reaction zone by employing catalyst tubes comprising two concentric tubes forming an annulus space which contain catalyst particles and removing product gas through the central tube (riser), thus exchanging heat directly between the hot product gas and the feed gas.

Major problems associated with the use of a reaction section comprising concentric tubes are:

- the degree of heat exchange which can be attained therewith, in particular when product gas with a temperature of 800°C or even 1000°C is to be cooled

- a large part of the internal volume of the catalyst tube is not used

- the heat exchange surface of the riser is limited by the diameter of the catalyst tube

- at the start up and at the shut down of the plant the riser an the catalyst tube are subject to a differential sliding because of the different temperatures. This sliding generate a very high stress of several tons because of the friction of the catalyst with the catalyst tube and the riser walls which contrast the sliding of the riser with the catalyst tube.

When the plant is subject to shut down and start up it is possible, and it has been experienced, a mechanical failure of the riser.

During the sliding of the riser with the catalyst tube the catalyst is subject to breaking and dust is formed which tends to syntherize, thus making very difficult the unloading of the spent catalyst.

Catalysts supported on metallic or ceramic foams have been proposed recently with the only scope of increasing the heat transfer rate and decreasing the pressure drop through the catalyst bed.

C.Y.Zhao, T.J-Lu and H.P.Hodson have presented in 2004 results from experimental measurements on radiative transfer in FeCrAlY foams having high porosity and different cells size and Y.Peng and J.T.Richardson have presented in 2004 the properties of ceramic foam as catalyst supports and reported experimental data showing that the catalyst on ceramic foam support shows increased overall heat transfer and lower pressure drop than beds of packed solid particles.

Open cell foams are three dimensional cellular materials made of interconnected solid struts forming a network. The unit cell in a foam resembles a polyhedron with pentagonal or hexagonal faces that limit a spherical-like inner space. Each cell, defined by the hollow volume of a polyhedron, constitutes a pore. The cell size is normally expressed in terms: pores per linear inch (PPI): the overall range of variation in cell size goes from 5 PPI to 100 PPI. Typical porosity values range from 80 to 97%.

When loading a fixed bed reactor with a foam cartridge rather than with packed particles, the high foam porosity would result in much lower pressure drops, whereas the use of preformed structures can simplify catalyst loading and unloading operations. Further more, tortuous flow paths through the porous matrix are expected to enhance gas/solid heat and mass transfer rates, and high surface-to-volume ratio would yield high activity per unit reaction volume.

The catalysts supported on ceramic and metallic foams have newer been considered for the advantages that they would offer in regenerative catalyst tubes.

When there will be a sliding between the catalyst tube and the riser at start-up and at shut-down the friction of the catalysts supported on metallic or ceramic foam would be negligible because the catalyst support can be preformed to avoid a strong contact with tubes walls

The invention therefore relates to the use of catalyst supported on metallic or ceramic foams to avoid the problems experienced by the actual regenerative catalyst tubes, suitable for producing hydrogen-containing gas, by eliminating the effects due the friction of the used conventional catalysts and to the use of the dead space as volume useful to install a second catalyst bed.

A small part of the bottom of the catalyst tube can be external to radiant box to improve the quench of the product.

The catalyst supported on ceramic and metallic foams and the apparatus according to the invention will be understood better hereinafter with the use of figures in which various preferred embodiments have been incorporated without having the intent of limiting the scope of the invention to the particular embodiments as depicted in the figures. In the drawings:

Fig. 1 represents a vertical section of a conventional regenerative tube;

Fig.2 represents an horizontal section of the conventional regenerative catalyst tubes of fig. 1;

Fig.3 represents a catalyst actually used that is supported on alumina;

Figg.4a and 4b represent the proposed catalyst on ceramic foams support with a pore structure and a preferential form in hollow half cylinders of the said ceramic foams support, respectively;

Fig.5 represents a vertical section of the catalyst tube according to the invention.

Fig.6 is an horizontal section of the catalyst tube according to the invention in the upper zone H2:

Fig.7 is a horizontal section of the catalyst tube according to the invention in the lower zone H1.

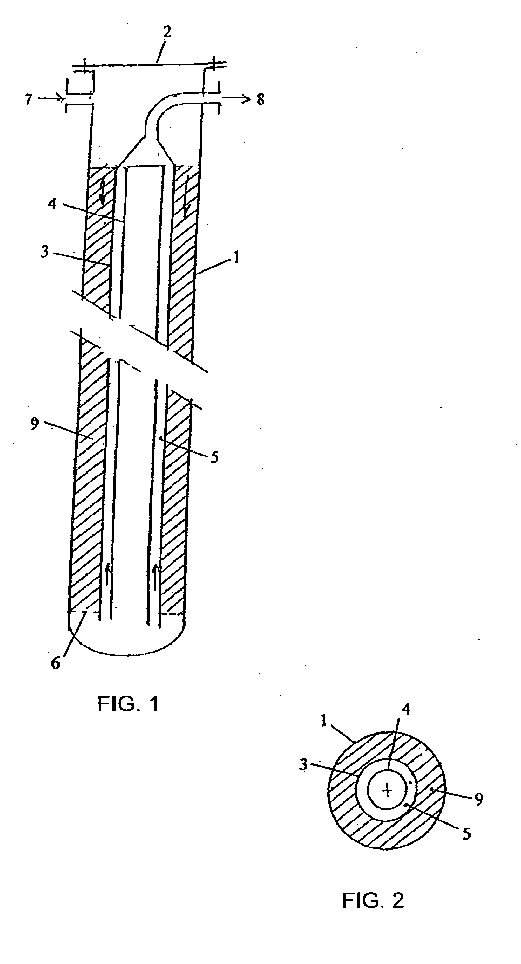

With reference to the figures 1 and 2, a conventional regenerative tube is made by the catalyst tube 1 with the flange 2 for loading the fresh catalyst and unloading the spent catalyst. The riser 3 forms with the heat transfer promoter 4 an annulus 5 and it forms and additional annulus 9 with the catalyst tube 1. The catalyst is installed in the annulus 9 and it is supported on the bottom grid 6. The feedstock 7 enters the catalyst tube at the top and move downward in the catalyst bed. The product 8 enters the annulus 5 and it moves upward in the annulus 5. The feedstock 7 receives heat from the flue gas through the catalyst tube 1 and from the product through the riser wall. The product 8 leaves the catalyst tube at the top.

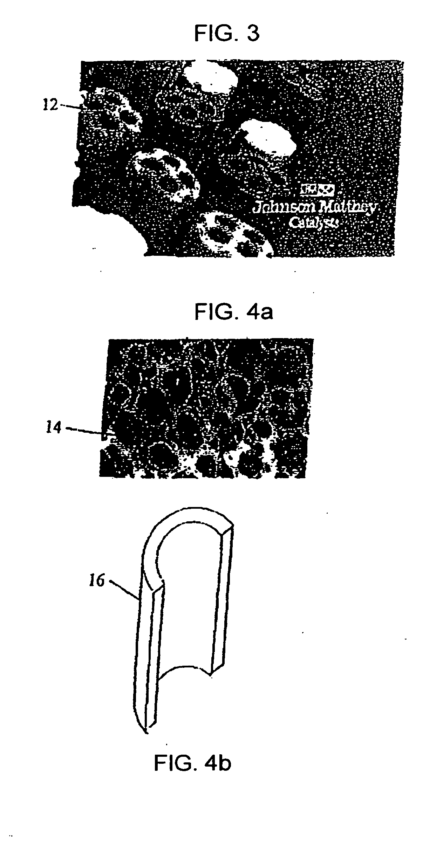

The figure 3 shows the catalysts actually used and the catalyst supported on metallic and ceramic foams. As an example the catalysts actually used are based on calcium aluminate or alumina ceramic supports which have typically the shape of small cylinders 12 with length from 13 to 20 mm with four internal circular channels having a diameter from 2.7 to 5.513 mm.

On the contrary, according to the present invention, the catalyst is supported on ceramic and metallic foams performed in a suitable shape to avoid friction with said catalyst and riser walls.

The figure 4a represents the proposed catalyst on ceramic foams supports with a pore structure 14 of 30 PPI, 99.5 % wt. $\alpha$-A10203 ceramic foam. A preferential form of said supports is shown in fig.4b where each of said supports are hollow half cylinders 16 in order to easy load and unload of the catalyst.

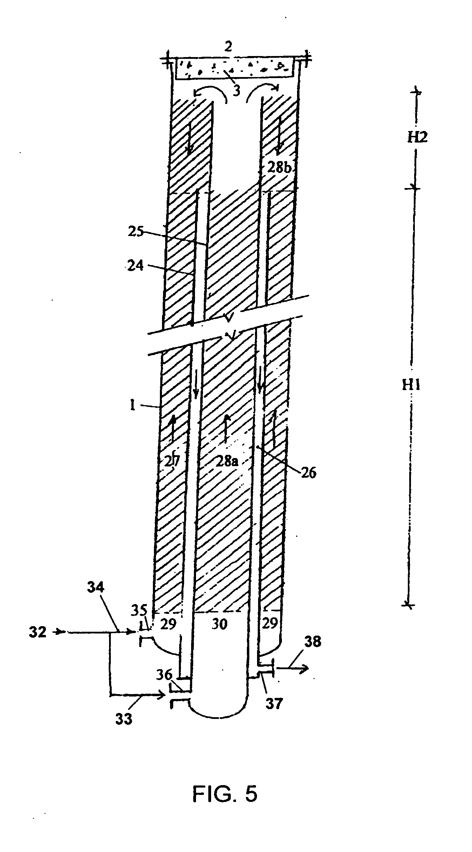

The figure 5 represents a vertical section of the catalyst tube accordling to the invention. The catalyt tube I is closed at the top with a flange 2, with the thermal insulation 3, for loading the fresh catalyst and unloading the spent catalyst. The riser is made by the annulus created by the concentric tubes 24 and 25. The catalyst tube 1 and the concentric tube 24 form an annular space. The concentric tube 24 has an height smaller than that of the catalyst tube 1 and it splits the catalyst tube in 2 vertical zones:

-    the bottom zone box having the height H1

-    the top zone having the height H2.

The catalyst is installed in 3 bed:

-    the bed 27 having a height H1 installed in the annulus between the catalyst tube 1 and the concentric tube 24

-    the bed 28a having a height H1 installed inside the concentric tube 25

-    the bed 28b having an height H2 installed the annulus between the catalyst tube and the concentric tube 25.

The catalyst beds are loaded above the bottom catalyst grids 29 and 30. The feedstock 32 is divided in two parts 33 and 34. There are two feedstock inlets and one product outlet. The feedstock 34 through the inlet 35 passes across catalyst bed 27 and the product 14 is collected in the annulus 26 formed by the two concentric tubes 24 and 25 and it leaves the catalyst tube at the exit 37. The feedstock 33 enters through the inlet 36, passes through the catalyst bed 28a and the catalyst bed 28b and the product is collected, together the product of the feedstock 34, in the annulus 26.

The feedstock 34 receives heat from the flue gas through the wall of the catalyst tube 1 and from the product through the wall of the concentric tube 24. The feedstock 33 receive heat only from the product in the annulus 26 through the wall of the concentric tube 25 and from the flue gas in the catalyst bed 28b through the catalyst tube 1 wall. With this arrangement it is possible to provide the required heat to obtain the same conversion of the feedstock 33 and 34. The concentric tubes 24 and 25 are free to slide respect the catalyst tube 1.

Part of the bottom zone H1 can be external to the radiant box to improve the quench of the product 14.

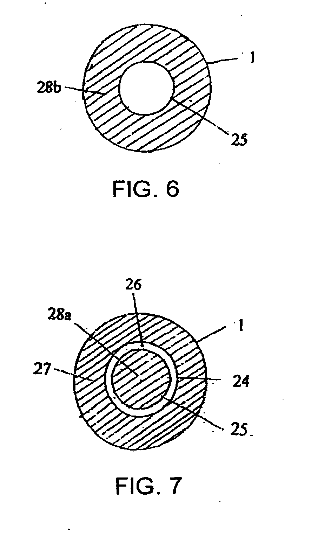

The figure 6 is a horizontal section of the catalyst tube according the invention in the upper zone H2.

The figure 7 is a horizontal section of the catalyst tube according the invention in the lower zone H1.

## Claims

1. Regenerative catalyst tube suitable for high temperature endothermic reactions performed at temperature from 300 to 1200°C producing hydrogen and sulphur or other products **characterized by** the fact that:

   it comprises two feedstock reaction patterns and one product pattern, wherein said patterns are obtained through three concentric tubes wherein the inner tube (25) has a height greater than that one of the intermediate tube (24) and the said intermediate tube (24) has a height smaller than that one of the outer tube (1), said concentric tubes defining a first annular space (27) to install a catalyst bed, a central circular space (28a) into the inner tube (25) to install a second catalyst bed surmounted by a empty zone which is in communication with said first catalyst bed (27), and an inner annulus (26) between said two catalyst beds where the product of reaction is collected from said empty zone;
   in said annular space (27) the catalyst being supported on metallic or ceramic foams or on similar supports as reticulated materials, suitable preformed to avoid friction with said catalyst and tubes walls.

2. Regenerative catalyst tube according to claim 1 **characterized by** the fact that the reaction heat required by the endothermic reactions is partly released from the product and the remaining balance is released from an external fluid preferentially flue gas.

3. Regenerative catalyst tube according to claims 1, and 2, **characterized by** the fact that the product transfers heat to the feedstock to perform the chemical reaction either through the internal and the external wall of the annulus (26).

4. Regenerative catalyst tube according to claims 1,2, and 3, **characterized by** the fact that the reaction started in the catalyst bed (28a) of the inner tube (25) in the internal side of the annulus (26) is completed in the catalyst bed (27) installed externally to the annulus (26), in the annular space.

5. Regenerative catalyst tube according to claims 1, 2, 3, and 4, **characterized by** the fact that there are two feedstock inlets: one (34) at the bottom of the annular space (26) and the other (33) at the bottom of the inner tube (25).

6. Regenerative catalyst tube according to claims 1, 2, 3, and 4, **characterized by** the fact the catalyst bed (28a) in the internal side of the annulus (26) is loaded above a bottom catalyst grid (30).

7. Regenerative catalyst tube according to preceding claims **characterized by** the fact that the pressure drop of the product stream in the product annulus (26) will be higher than 0,1 bar.

8. Regenerative catalyst tube according to the preceding claims **characterized by** the fact that between the inner tube (25) and the intermediate tube (24) it is provided a passage to communicate with the annulus (26).

9. Regenerative catalyst tube according to claim 8 **characterized by** the fact that there are two catalyst beds (27,28b) in the annular space vertically separated over and below said passages.

10. Regenerative catalyst tube according to preceding claims **characterized by** the fact that the intermediate (24) and the inner (25) tubes are free to slide in respect to the catalyst tube (1).

11. Regenerative catalyst tube according to the preceding claims **characterized by** the fact that part of the bottom of the catalyst tube can be external to a radiant box or to the combustor chamber of a claus reactor.

## Patentansprüche

1. Regeneratives Katalysatorrohr, das für endotherme Hochtemperaturreaktionen geeignet ist, die bei einer Temperatur von 300 bis 1200°C ausgeführt werden und bei denen Wasserstoff und Schwefel oder andere Produkte entstehen, **dadurch gekennzeichnet, dass**:

   es zwei Ausgangsmaterialreaktionsmuster und ein Produktmuster umfasst, wobei die Muster durch drei konzentrische Rohre erhalten werden, wobei das innere Rohr (25) höher als das Zwischenrohr (24) ist und das Zwischenrohr (24) eine geringere Höhe als das äußere Rohr (1) hat, wobei die konzentrischen Rohre Folgendes festlegen: einen ersten ringförmigen Raum (27), um ein Katalysatorbett zu installieren, einen mittigen kreisrunden Raum (28a) in das innere Rohr (25) hinein, um ein zweites Katalysatorbett zu installieren, über dem sich eine leere Zone erstreckt, die mit dem ersten Katalysatorbett (27) in Strömungsverbindung steht, und einen inneren Ringraum (26) zwischen den zwei Katalysatorbetten, in dem das Reaktionsprodukt aus der leeren Zone aufgefangen wird; der Katalysator in dem ringförmigen Raum (27) auf Metall- oder Keramikschaumstoffen oder auf ähnlichen Trägern als netzartige Materialien gestützt wird, die in geeigneter Weise vorgeformt sind, um einen Reibungskontakt mit den Katalysator- und Rohrwänden zu vermeiden.

2. Regeneratives Katalysatorrohr nach Anspruch 1, **dadurch gekennzeichnet, dass** die Reaktionswärme, die durch die endothermen Reaktionen benötigt wird, teilweise aus dem Produkt freigesetzt wird und der übrige Teil aus einem externen Fluid, vorzugsweise Rauchgas, freigesetzt wird.

3. Regeneratives Katalysatorrohr nach den Ansprüchen 1 und 2, **dadurch gekennzeichnet, dass** das Produkt Wärme entweder über die Innenwand oder über die Außenwand des Ringraums (26) zu dem Ausgangsmaterial überträgt, um die chemische Reaktion auszuführen.

4. Regeneratives Katalysatorrohr nach den Ansprüchen 1, 2 und 3, **dadurch gekennzeichnet, dass** die Reaktion, die in dem Katalysatorbett (28a) des inneren Rohres (25) auf der Innenseite des Ringraums (26) begonnen wurde, in dem Katalysatorbett (27), das außerhalb des Ringraums (26) installiert ist, in dem ringförmigen Raum vollendet wird.

5. Regeneratives Katalysatorrohr nach den Ansprüchen 1, 2, 3 und 4, **dadurch gekennzeichnet, dass** es zwei Ausgangsmaterialeinlässe gibt: einen (34) am Boden des Ringraums (26) und den anderen (33) am Boden des inneren Rohres (25).

6. Regeneratives Katalysatorrohr nach den Ansprüchen 1, 2, 3 und 4, **dadurch gekennzeichnet, dass** das Katalysatorbett (28a) auf der Innenseite des Ringraums (26) oberhalb eines am Boden befindlichen Katalysatorgitters (30) beschickt wird.

7. Regeneratives Katalysatorrohr nach den vorangehenden Ansprüchen, **dadurch gekennzeichnet, dass** der Druckabfall des Produktstromes in dem Produktringraum (26) höher als 0,1 bar ist.

8. Regeneratives Katalysatorrohr nach den vorangehenden Ansprüchen, **dadurch gekennzeichnet, dass** zwischen dem inneren Rohr (25) und dem Zwischenrohr (24) ein Durchgang für eine Strömungsverbindung mit dem Ringraum (26) vorhanden ist.

9. Regeneratives Katalysatorrohr nach Anspruch 8, **dadurch gekennzeichnet, dass** es zwei Katalysatorbetten (27, 28b) in dem ringförmigen Raum gibt, die über und unter den Durchgängen vertikal getrennt sind.

10. Regeneratives Katalysatorrohr nach den vorangehenden Ansprüchen, **dadurch gekennzeichnet, dass** sich das Zwischenrohr (24) und das innere Rohr (25) in Bezug auf das Katalysatorrohr (1) frei verschieben können.

11. Regeneratives Katalysatorrohr nach den vorangehenden Ansprüchen, **dadurch gekennzeichnet, dass** ein Teil der Unterseite des Katalysatorrohres außerhalb eines Strahlerkastens oder der Brennkammer eines Claus-Reaktors liegt.

## Revendications

1. Tube catalytique à régénération adapté pour des réactions endothermiques à haute température effectuées à une température de 300 à 1200°C, produisant de l'hydrogène et du sulfure ou d'autres produits, **caractérisé en ce que** :

   il comprend deux modèles de réaction de matières premières et un modèle de produit, dans lequel lesdits modèles sont obtenus par le biais de trois tubes concentriques, où le tube intérieur (25) a une hauteur supérieure à celle du tube intermédiaire (24) et ledit tube intermédiaire (24) a une hauteur inférieure à celle du tube extérieur (1), lesdits tubes concentriques définissant un premier espace annulaire (27) pour installer un lit de catalyseur, un espace circulaire central (28a) dans le tube intérieur (25) pour installer un deuxième lit catalyseur surmonté par une zone vide qui est en communication avec ledit premier lit de catalyseur (27), et un anneau intérieur (26) entre lesdits deux lits de catalyseur où le produit de réaction est recueilli à partir de ladite zone vide ;
   dans ledit espace annulaire (27), le catalyseur étant supporté sur des mousses métalliques ou céramiques ou sur des supports similaires tels que des matériaux réticulés, préformés de manière appropriée pour éviter une friction avec lesdites parois du catalyseur et des tubes.

2. Tube catalytique à régénération selon la revendication 1, **caractérisé en ce que** la chaleur de réaction requise par les réactions endothermiques est partiellement libérée par le produit et la quantité restante est libérée par un fluide externe, de préférence des gaz de fumée.

3. Tube catalytique à régénération selon les revendications 1 et 2, **caractérisé en ce que** le produit transfère de la chaleur à la matière première pour effectuer la réaction chimique à travers une ou l'autre paroi interne et externe de l'anneau (26).

4. Tube catalytique à régénération selon les revendications 1, 2 et 3, **caractérisé en ce que** la réaction démarrée dans le lit de catalyseur (28a) du tube intérieur (25) dans le côté interne de l'anneau (26) est achevée dans le lit de catalyseur (27) installé à l'extérieur de l'anneau (26), dans l'espace annulaire.

5. Tube catalytique à régénération selon les revendications 1, 2, 3 et 4, **caractérisé en ce qu'**il existe deux entrées de matières premières : une (34) au niveau du bas de l'espace annulaire (26) et l'autre (33) au niveau du bas du tube intérieur (25).

6. Tube catalytique à régénération selon les revendications 1, 2, 3 et 4, **caractérisé en ce que** le lit de catalyseur (28a) dans le côté interne de l'anneau (26) est chargé au-dessus d'une grille de catalyseur inférieur (30).

7. Tube catalytique à régénération selon les revendications précédentes, **caractérisé en ce que** la chute de pression du flux de produit dans l'anneau de produit (26) sera supérieure à 0,1 bar.

8. Tube catalytique à régénération selon les revendications précédentes, **caractérisé en ce qu'**un passage est prédisposé entre le tube intérieur (25) et le tube intermédiaire (24) pour communiquer avec l'anneau (26).

9. Tube catalytique à régénération selon la revendication 8, **caractérisé en ce qu'**il existe deux lits de catalyseur (27, 28b) dans l'espace annulaire séparés verticalement au-dessus et au-dessous desdits passages.

10. Tube catalytique à régénération selon les revendications précédentes, **caractérisé en ce que** les tubes intermédiaire (24) et intérieur (25) sont libres de coulisser par rapport au tube catalytique (1).

11. Tube catalytique à régénération selon les revendications précédentes, **caractérisé en ce qu'**une partie du fond du tube catalytique peut être externe à un caisson rayonnant ou à la chambre de combustion d'un réacteur de Claus.

FIG. 1

FIG. 2

## FIG. 3

## FIG. 4a

## FIG. 4b

FIG. 5

FIG. 6

FIG. 7